# EUROPÄISCHE PATENTSCHRIFT

(11) **EP 1 103 104 B1**
(45) Veröffentlichungstag und Bekanntmachung des Hinweises auf die Patenterteilung: **29.01.2003**
(21) Anmeldenummer: 99942770.1
(22) Anmeldetag: 01.07.1999
(51) Int. Cl.: H04B 1/707

(54) **AKQUISITIONSVERFAHREN UND VORRICHTUNG ZUR DURCHFÜHRUNG DES VERFAHRENS**
ACQUISITION METHOD AND DEVICE FOR CARRYING OUT SAID METHOD
PROCEDE D'ACQUISITION ET DISPOSITIF POUR METTRE EN OEUVRE LEDIT PROCEDE

(30) Priorität: 21.07.1998 DE 19832850
(43) Veröffentlichungstag der Anmeldung: 30.05.2001
(73) Patentinhaber: Infineon Technologies AG, 81669 München (DE)
(72) Erfinder: GUNZELMANN, Bertram, D-86163 Augsburg (DE); MOLEV-SHTEIMAN, Arkadi, 58001 Azor (IL)
(74) Vertreter: Lange, Thomas, Dr.
(86) Internationale Anmeldenummer: DE9901962
(87) Internationale Veröffentlichungsnummer: WO00005821

(56) Entgegenhaltungen:
- WO-A-96/14697
- GB-A- 2 311 450
- US-A- 5 414 730
- US-A- 5 768 306

## Beschreibung

Die Erfindung betrifft ein Akquisitionsverfahren, bei welchem eine mit einer Frequenz f eingehende, kodierte Spreizfolge mit m Bit mit einer lokal erzeugten Spreizfolge korreliert wird, indem eine Vielzahl von lokal erzeugten Spreizfolgen zu empfangenen Spreizfolgen phasenverschoben werden. Die Erfindung betrifft ferner eine Vorrichtung zur Durchfilhrung des Verfahrens.

Die US-PS 5,768,306 und die hierzu korrespondierende EP 0 668 663 Bl betreffen eine Gleitkorrelationsvorrichtung mit einer Speicherschaltung zur Speicherung eines empfangenen Signals, mit einer Zeitsteuerung - Erzeugungseinrichtung zur Erzeugung eines Taktsignals. Das Taktsignal dient zum Auslesen des in der Speicherschaltung gespeicherten empfangenen Signals bei einer Frequenz, die im wesentlichen höher ist als eine Speicherrate des empfangenen Signals. Die Gleitkorrelationsvorrichtung weist weiterhin eine Spreizungscodesequenzkopieerzeugungseinrichtung zur Erzeugung einer Kopie einer Spreizungscodesequenz, eine Multiplikationseinrichtung zur Multiplikation des ausgelesenen empfangenen Signals mit der Kopie des Spreizungscodesequenz, eine Akkumulatoreinrichtung zur Aufspeicherung eines Ausgangssignals der Multiplikationseinrichtung über eine vorbestimmte Zeitdauer sowie eine Schwellenwert-Erfassungseinrichtung zur Erfassung, ob ein Ausgangssignal der Akkumulatoreinrichtung einen vorbestimmten Schwellenwert überschreitet oder nicht. Des Weiteren ist eine Takterzeugungseinrichtung zur Steuerung der Spreizungscodesequenzkopieerzeugimgseinrichtung zur Erzeugung der Spreizungscodesequenz mit der gleichen Rate wie die des Taktsignals vorgesehen, wobei die Takterzeugungseinrichtung angepaßt ist, eine Phase der Kopie der Spreizungscodesequenz zu ändern, wenn ein Erfassungsausgangssignal der Schwellenwert-Erfassungseinrichtung kleiner ist als der Schwellenwert.

Ein grundlegendes Spreizverfahren ist das Direct-Sequence-Verfahren. Dabei wird eine Nachricht vor der Sendung mit einer höher frequenteren pseudozufälligen Binärfolge moduliert. Der Empfänger kann aus dem dabei entstehenden Pseudorauschsignal bei Kenntnis der Binärfolge die Nachricht extrahieren.

Derartige Verfahren werden in der Datenkommunikation, Ortung und Navigation eingesetzt. Dabei besteht das Problem, daß ein Empfänger von mehreren Sendern Signale empfängt und dann zur Identifizierung der Signale die zeitliche Lage der Signale bestimmt werden muß.

Ein wichtiges Einsatzgebiet für ein derartiges Verfahren ist insbesondere die Echtzeit-Satelliten-Navigation nach dem System NAVSTAR GPS (Navigation System With Timing And Ranging, Global Positioning System). Hier dienen eine Vielzahl von Satelliten als Sendernetz, die von Boden- oder Kontrollstationen gesteuert werden. Für eine dreidimensionale Ortsbestimmung eines Empfängers müssen wenigstens vier Satelliten im Sichtfeld des Empfängers sein. Die Nachrichten der Sender werden im Empfänger entschlüsselt, um daraus die notwendigen Berechnungen anzustellen. Damit ein Empfänger einen Satelliten identifizieren und dessen Informationen auswerten kann, muß er einen senderspezifischen Code (Gold-Code) kennen, der als periodische Signalfolge vorgegebener Länge übertragen wird. Zum Auffinden des Codes werden im Empfänger alle Codes der Satelliten gespeichert. Üblicherweise wird dann zunächst der Code eines beliebigen Satelliten erzeugt und mit dem empfangenen Code verglichen. Falls es sich nicht um den erwarteten Satelliten handelt - was in der Regel der Fall ist - müssen Vergleiche mit den abgespeicherten Codes so lange durchgeführt werden, bis Übereinstimmung festgestellt wird.

Da ferner die Phasenlage jedes ankommenden Signals nicht bekannt ist, muß das Signal mit dem empfangenen Code so lange verschoben werden, bis gegebenfalls Übereinstimmung festgestellt wird. Der Vergleich erfolgt über die Korrelationsfunktion des Signals, welches nahezu eins wird, wenn Synchronisation besteht. Wenn man für diesen Suchvorgang alle möglichen Varianten berücksichtigt, müssen grundsätzlich lange Suchzeiten in Kauf genommen werden.

Aus Schrödter, GPS-Satelliten-Navigation, Franzis-Verlag München, 1994 sind zwar Verfahren zur Verkürzung der Akquisitionszeit bekannt. Beispielsweise werden Empfänger mit mehreren Kanälen eingesetzt, die entsprechend der Anzahl der Kanäle parallel suchen können. Das hat aber einen relativ großen Schaltungsaufwand zur Folge.

Der Erfindung liegt die Aufgabe zugrunde, ein Verfahren und eine Vorrichtung der eingangs genannten Art anzugeben, mit welchem die Akquisitionszeit verringert wird.

Verfahrensmäßig wird die Aufgabe dadurch gelöst, daß eine Korrelation der empfangenen Spreizfolge mit einer lokal erzeugten Spreizfolge mit der Frequenz f durchgeführt wird,
daß die empfangene Spreizfolge gespeichert wird und diese gespeicherte empfangene Spreizfolge mit einer Überabtastrate i*f prozessiert wird, und
daß die empfangene gespeicherte Spreizfolge in i Abschnitte eingeteilt wird und die Korrelation in i Schritten durchgeführt wird.

Vorrichtungsmäßig wird die Aufgabe dadurch gelöst, daß ein rückgekoppeltes Schieberegister zur seriellen Aufnahme der empfangenen Signalfolge vorhanden ist, welches mit einer Überabtastrate getaktet ist, daß die Registerstellen des Schieberegisters parallel mit dem Eingang eines Speichers zur Abspeicherung mehrerer nacheinander ausgelesenen Schieberegisterinhalte verbunden sind, daß der Speicher ausgangsseitig parallel mit den Schieberegister verbunden ist, daß ein weiterer Speicher zur Aufnahme von Referenzsignalfolgen vorhanden ist, und daß ein Vergleicher zum Vergleichen des Speicherinhalts mit dem Inhalt des weiteren Speichers unter der Überabtastrate vorhanden ist.

Die Erfindung hat den Vorteil, daß die Sendersynchronisation bzw. das Feststellen einer Übereinstimmung zwischen einem empfangenen Code und einem abgespeicherten Code um das Maß der Überabtastrate schneller durchgeführt werden kann als bei einer üblichen, sequentiell ablaufenden Synchronisation. Wenn beispielsweise mit einer 32-fachen Überabtastrate gearbeitet wird, so erfolgt der Synchronisiervorgang zweiundreißig Mal schneller als nach dem herkömmlichen Verfahren.

Zur einfachen und schnellen Verarbeitung ist es zweckmäßig, daß die empfangene Spreizfolge innerhalb von k Zyklen in k Abschnittsvarianten mit jeweils m Bit mit einer Überabtastrate von k*f bitweise verschoben wird, indem das höchstwertige Bit einer Abschnittsvariante an die Stelle des niedrigstwertigen Bits der folgenden Abschnittsvariante verschoben wird, daß nach k Zyklen das niedrigstwertigste Bit durch das folgende Bit der empfangenen Spreizfolge ersetzt wird und der Vorgang (m-1)mal wiederholt wird, daß die lokal erzeugte Spreizfolge in k Abschnitte mit jeweils n Bit unterteilt und jeder dieser Abschnitte innerhalb eines Zyklus mit einer Abschnittsvariante der eingegangenen Spreizfolge verglichen wird, daß alle Übereinstimmungen gezählt und die Zählergebnisse gespeichert werden und daß abschließend eine Maximumsuche über alle Zählerergebnisse durchgeführt wird.

Auf diese Weise können die Signalfolgen in Daten-Wortlängen unterteilt werden, welche sich auf einfache Weise mit üblichen Datenverarbeitungsbausteinen, wie Schieberegistern, Speichern u.s.w. verarbeiten lassen. Das hat ferner den Vorteil, daß ein Durchtauschen der einzelnen Bits der empfangenen Signalfolge mit Hilfe eines einfachen kurzgeschlossenen Schieberegisters in Verbindung mit einem FIFO-Speicher erfolgen kann.

Nachfolgend wird die Erfindung anhand eines in der Zeichnung dargestellten Ausführungsbeispieles weiter beschrieben.
- Fig. 1: zeigt schematisch einen an sich bekannten Empfänger für das GPS-Navigationssystem;
- Fig. 2: zeigt schematisch eine Einzelheit des Empfängers gemäß Fig. 1 und
- Fig. 3: zeigt schematisch die Anordnung eines Addierers als Einzelheit der Schaltungsanordnung gemäß Fig. 2.

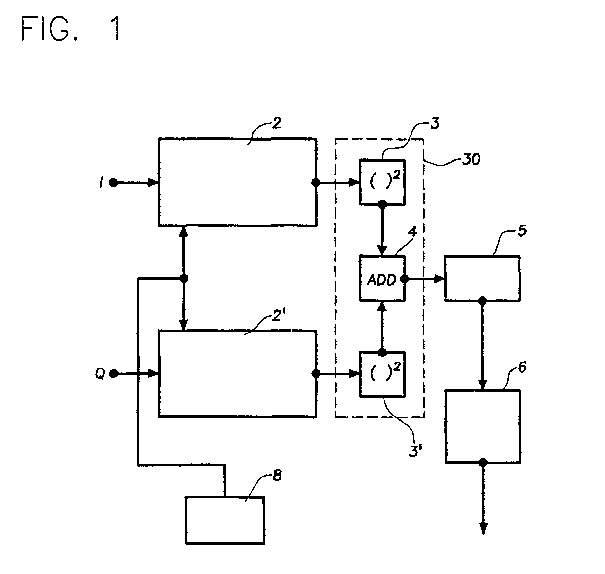

In Fig. 1 ist ein Empfänger zur Durchführung eines Spreizverfahrens dargestellt, wie er beispielsweise in der Datenkommunikation, im Mobilfunk sowie bei der Ortung und Navigation eingesetzt werden kann. Der Aufbau und die Funktion dieses Empfängers werden nachfolgend für die Anwendung im GPS-Ortungs- und Navigationssystems beschrieben, da die Operationen im wesentlichen typisch für die Operationen sind, die in allen anderen Empfängern für ein Spreizverfahren angewendet werden. Es wird hierbei aus dem empfangenen Signal, welches neben dem Signal eines ganz bestimmten Senders noch die Informationen aller anderen wirksamen Sender enthält, aus dem Rauschpegel des gesamten Signals herausgefunden.

Das von einer Antenne (nicht dargestellt) als Spreizfolge kommende Gesamtsignal wird quadraturmoduliert und mit Hilfe eines Quadraturmodulators ins Basisband gemischt. Eine Quadraturkomponente Q und eine in-Phase-Komponente I werden mit je einem Analog/Digitalwandler (nicht dargestellt) mit der Wortbreite 1 Bit quantisiert.

Die Signale werden dann in zwei Zweigen Korrelatoren 2 bzw. 2' gleicher Bauart zugeführt, in welchem jeweils der Gold-Code des zugehörigen Satelliten aus dem Rauschpegel des Gesamtsignals herausgefunden wird. Die Ausgabesignale der Korrelatoren 2, 2' werden einem Leistungsberechner 30 zugeführt, in welchem aus beiden Zweigen die Betragsquadrate in jeweils einer Einheit 3, 3' berechnet und in einem Addierer 4 aufsummiert werden. Aus dem aufsummierten Signal wird in der Einheit 5 die Wurzel gezogen und schließlich wird zur Erhöhung der Sicherheit über das ermittelte Ergebnis in einem Akkumulator 6 die Signalstärke M-mal akkumuliert.

Ein Gold-Codegenerator 8 versorgt die Korrelatoren 2, 2' mit den bei der Suche in Frage kommenden Gold-Codes.

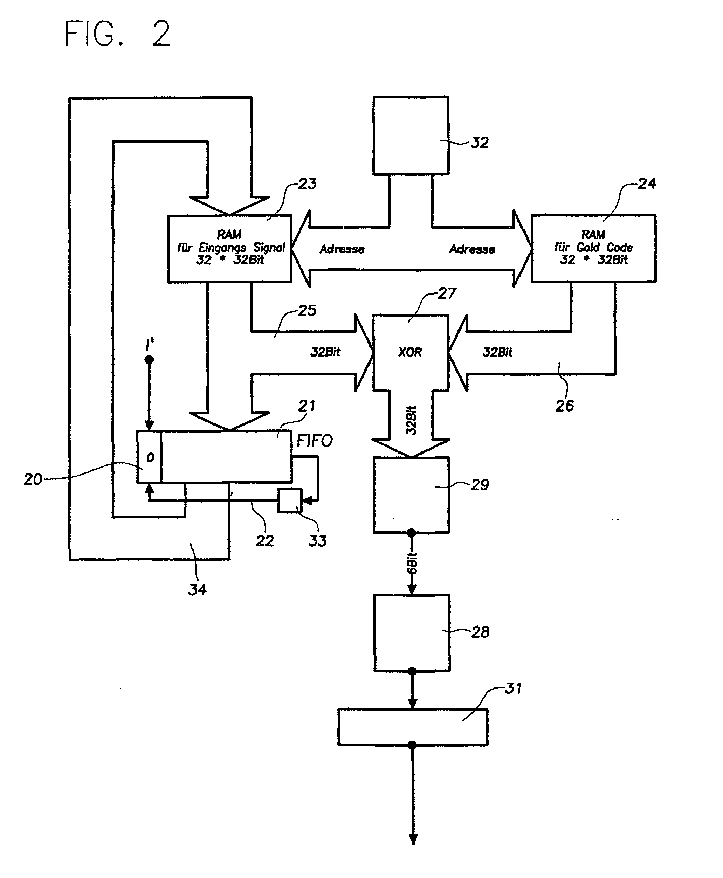

Fig. 2 veranschaulicht Einzelheiten des Korrelator 2 gemäß Fig. 1. Da beide Korrelatoren baugleich sind, beschränkt sich die Beschreibung auf den Korrelator 2.

Der jeweils erzeugte Gold-Code mit einer Länge von m=1023 Bits, die auch als Chip bezeichnet werden, wird in einen Datenspeicher 24 gespeichert und. für die Suchdauer beibehalten. Er wird hierbei in k=32 Abschnitte mit jeweils n=32 Bit geteilt, so daß auf 32 Speicherplätzen jeweils 32 Bit (bzw. 31 Bit) gespeichert werden. Das eingehende Signal I wird bitweise über ein Ein-Bit-Register 20 seriell in ein FIFO-Schieberegister 21 mit einer ersten Frequenz f von beispielsweise 1 MHz eingetaktet. Im vorliegenden Fall hat das FIFO-Schieberegister 21 zweiunddreißig Registerstellen. Es arbeitet mit einer Überabtastrate von i*f, d.h. von 32 MHz.

Die Datenspeicher 23, 24 weisen Adresszeiger auf, die in der Weise über eine Steuerung 32 das Ein- und Auslesen steuern, daß die 32 Bit-Wörter in chronologischer Reihenfolge abgespeichert sind. Die Korrelationen werden bei dem aktuellsten 32 Bit-Wort begonnen und bei dem ältesten 32 Bit-Wort beendet.

Innerhalb eines 32 Bit-Wortes befindet sich das jeweils aktuellste, d.h. zuletzt eingelesene Bit, in der niederwertigsten Stelle und das älteste Bit an der höchsten Stelle.

Das FIFO-Schieberegister 21 dient dazu, nacheinander 32 Bit-Wörter zu erzeugen, die sich jeweils vom vorausgehenden 32 Bit-Wort dadurch unterscheiden, daß sie um ein Bit von der niedrigstwertigen Stelle zur höchstwertigen Stelle verschoben sind.

Eine Korrelation erfolgt folgendermaßen:

Bevor ein neues Bit der empfangenen Spreizfolge bzw. des empfangenen Signals I' in die niedrigstwertige Registerstelle 20 eingelesen wird, wird das aktuelle 32 Bit-Wort in Richtung zur höchstwertigen Stelle verschoben, wobei das höchstwertige Bit in ein als Verzögerungsglied dienendes Zwischenregister 33 eingelesen wird. Nun wird das Bit des empfangenen Signals I' in die niederwertigste Stelle geschrieben, das Bit im Zwischenspeicher wird verworfen. Das FIFO-Schieberegister 21 enthält dann in der niedrigstwertigen Registerstelle das neu empfangene Bit und in den übrigen Registerstellen die 31 niedrigwertigsten Bits des älteren 32 Bit-Wortes. Gleichzeitig wird ein Summator 28 auf den Wert null zurückgesetzt. Das neue 32 Bit-Wort wird unter derjenigen Adresse des als RAM ausgebildeten Datenspeichers 23 gespeichert, an der das vorausgehende 32 Bit-Wort ausgelesen wurde.

Für alle verbleibenden Speicherstellen des Datenspeichers 23 wird dann jeweils nacheinander der Speicherinhalt ausgelesen und mit dem entsprechenden Speicherinhalt des als RAM ausgebildeten Datenspeichers in einem XOR-Vergleicher 27 verglichen, der ein 32 Bit langes Ergebnis liefert. In einem nachgeschalteten Addierer 29 wird die Summe aller logisch-1-Werte dieses 32 Bit-Wortes ermittelt.

Gleichzeitig wird das aktuelle 32 Bit-Wort aus dem Datenspeicher 23 in das FIFO 21 geschrieben und um 1 Bit von der niedrigstwertigen Stelle zur höchstwertigen Stelle verschoben. Das zuvor im Register 33 zwischengespeicherte Bit wird jetzt in die niedrigstwertigste Stelle 20 des FIFO-Schieberegisters 21 eingelesen. Das auf diese Weise erzeugte neue Wort wird unter seiner alten Adresse im Datenspeicher 23 abgespeichert. Es wird dann wieder ein Vergleich mit dem entsprechenden Abschnitt des Gold-Codes, der im Datenspeicher 24 abgespeichert ist, durchgeführt, wie es oben bereits beschrieben wurde.

Wenn auf diese Weise alle 32 im Datenspeicher 23 abgespeicherten Worte in 32 Zyklen verarbeitet wurden, wird das Korrelationsergebnis durch den Summator 28 berechnet.

Der Inhalt des FIFO-Schieberegisters 21 wird mit 32 MHz parallel über einen Bus 34 in eine erste Adresse eines Datenspeichers (RAM 23) gespeichert. Danach wird der Adresszeiger des RAM 23 um eine Stelle erhöht und das FIFO-Schieberegister 21 wird erneut mit einem zweiunddreißig Bit langen Datenwort geladen und der Korrelationsvorgang beginnt von vorne.

Im weiteren Datenspeicher RAM 24, der identisch zum RAM 23 zweiunddreißig Speicherplätze mit jeweils zweiunddreißig Bit aufweist, wird der Gold-Code abgespeichert, wie er vom Gold-Code-Generator 8 (Fig. 1) erzeugt wird. In gleicher Weise, wie die Abschnitte vorgegebener Chiplänge n=32 der empfangenen Chipfolgen im RAM 23 abgespeichert sind, wird auch jeweils der Gold-Code im weiteren RAM 24 in Abschnitte vorgegebener Länge n=32 unterteilt und unter zweiunddreißig aufeinander folgenden
Adressen abgespeichert. Die Ausgänge beider RAMs 23, 24 werden über Parallelbusse 25 bzw. 26 mit jeweils einer Breite von zweiunddreißig Bit dem XOR-Vergleicher 25 zugeführt und darauf bitweise auf Übereinstimmung überprüft. Die Übereinstimmung anzeigenden Bits werden in einem Bitsummierer 27 auf summiert und in einem Akkumulator 28 über zweiunddreißig Zyklen aufsummiert.

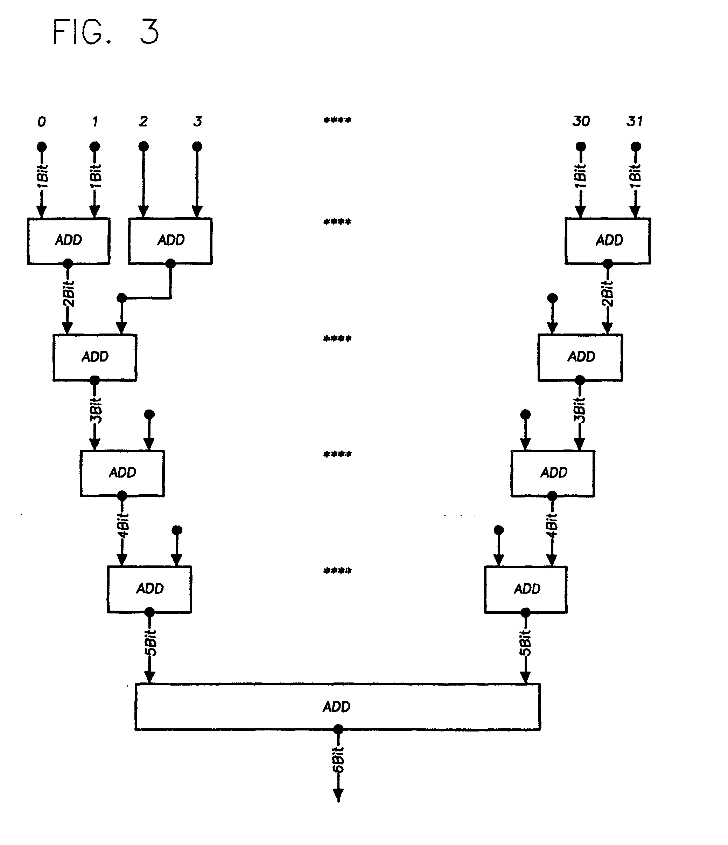

In Fig. 3 ist ein besonders schnell arbeitendes Beispiel für den Bitsummierer 27 gemäß Fig. 2 veranschaulicht. Er besteht aus einer kaskadenartigen Zusammenschaltung von 2-Bit-Addierern ADD, wobei die Ausgänge jeweils zwei Addierer ADD auf die Eingänge eines folgenden Addierers ADD einer weiteren Stufe geschaltet sind. In dem folgenden Beispiel sind somit zum Summieren von zweiunddreißig Bit in der ersten Stufe sechzehn Addierer ADD erforderlich. Die zweite Stufe weist sechzehn Addierer ADD auf usw.

Eine mögliche Maximumsuche besteht darin, daß z.B. in der Recheneinheit 31 eine Maximumsuche über alle Signale des Akkumulators 6 durchgeführt wird.

## Patentansprüche

1. Akquisitionsverfahren, bei welchem eine mit einer Frequenz f eingehende, binär codierte Spreizfolge mit m Bits mit einer lokal erzeugten Spreizfolge korreliert wird, indem eine Vielzahl von lokal erzeugten Spreizfolgen zur empfangenen Spreizfolge phasenverschoben werden,
sowie eine Korrelation der empfangenen Spreizfolge mit einer lokal erzeugten Spreizfolge mit der Frequenz f durchgeführt wird,
**dadurch gekennzeichnet,**
- **daß** die empfangene Spreizfolge gespeichert wird und diese gespeicherte empfangene Spre:izfolge mit einer Überabtasträte i*f prozessiert wird, und
- **daß** die empfangene gespeicherte Spreizfolge in i Abschnitte eingeteilt wird und die Korrelation in i Schritten durchgeführt wird.

2. Verfahren nach Anspruch 1,
**dadurch gekennzeichnet,**
**daß** die empfangene Spreizfolge innerhalb von k Zyklen in k Abschnittsvarianten mit jeweils m Bit mit einer Überabtastrate von k*f bitweise verschoben wird, indem das höchswertige Bit einer Abschnittsvariante an die Stelle des niedrigstwertigsten Bits der folgenden Abschnittsvariante verschoben wird, daß nach k Zyklen das niedrigstwertigste Bit durch das folgende Bit der empfangenen Spreizfolge ersetzt wird und der Vorgang (m-1)mal wiederholt wird,
- **daß** die lokal erzeugte Spreizfolge in k Abschnitte mit jeweils n Bit unterteilt und jeder dieser Abschnitte innerhalb eines Zyklus mit einer Abschnittsvariante der eingegangenen Spreizfolge verglichen wird,
- **daß** alle Übereinstimmungen gezählt und die Zählergebnisse gespeichert werden und
- **daß** abschließend eine Maximumsuche über alle Zählergebnisse durchgeführt wird.

3. Verfahren nach Anspruch 1 oder 2,
**dadurch gekennzeichnet,**
**daß** die Anzahl der Abschnitte vorgegebener Länge k=32 und die Chiplänge der Abschnitte n=32 ist.

4. Vorrichtung mit Mitteln zur Durchführung der Schnitt des Verfahrens nach Anspruch 1,
**dadurch gekennzeichnet,**
**daß** ein rückgekoppeltes Schieberegister zur seriellen Aufnahme der empfangenen Signalfolge vorhanden ist, welches mit einer Überabtastrate getaktet ist,
**daß** die Registerstellen des Schieberegisters parallel mit dem Eingang eines FIFO-Speichers zur parallelen Abspeicherung von mehreren, nacheinander ausgelesenen Schieberegisterinhalten verbunden sind,
**daß** der FIFO-Speicher ausgangsseitig parallel mit den Schieberegisterstellen zur parallelen Datenübergabe in das Schieberegister verbunden ist,
**daß** ein weiterer Speicher zur Aufnahme von Referenzsignalfolgen
vorhanden ist, und
**daß** ein Vergleicher zum Vergleichen des FIFO-Speicherinhalts mit dem Inhalt des anderen Speichers unter der Überabtastrate vorhanden ist.

5. Vorrichtung nach Anspruch 4,
**dadurch gekennzeichnet, daß**
am Ausgang des Vergleichers ein Summierer vorhanden ist um die beim bitweisen Vergleich bei übereinstimmende Bitstellen erzeugten logischen Werte aufzusummieren,
daß der Summierer aus einer kaskadenartigen Zusammenschaltung von 2-Bit-Addierern zusammengesetzt ist, wobei die Ausgänge jeweils zweier Addierer auf die Eingänge eines folgenden Addierers geschaltet sind.

## Claims

1. Acquisition method in which a binary-coded spread sequence which arrives at a frequency f and has m bits is correlated with a locally generated spread sequence by phase-shifting a multiplicity of locally generated spread sequences with respect to the received spread sequence,
and also the received spread sequence is correlated with a locally generated spread sequence at the frequency f,
**characterized**
- **in that** the received spread sequence is stored and this stored, received spread sequence is processed at an oversampling rate i*f, and
- **in that** the received, stored spread sequence is split into i sections and the correlation is carried out in i steps.

2. Method according to Claim 1,
**characterized**
**in that** the received spread sequence is shifted bit by bit within k cycles in k section variants each having m bits at an oversampling rate of k*f by shifting the most significant bit of a section variant to the position of the least significant bit of the succeeding section variant, in that, after k cycles, the least significant bit is replaced by the succeeding bit of the received spread sequence and the process is repeated (m-1) times,
- **in that** the locally generated spread sequence is subdivided into k sections each having n bits and each of these sections is compared with a section variant of the received spread sequence within a cycle,
- **in that** all matches are counted and the count results are stored, and
- **in that**, finally, a maximum search is carried out over all the count results.

3. Method according to Claim 1 or 2,
**characterized**
**in that** the number of sections of prescribed length is k=32 and the chip length of the sections is n=32.

4. Apparatus having means for carrying out the steps of the method according to Claim 1,
**characterized in that**
a shift register with feedback is provided for holding the received signal sequence in serial form and is clocked at an oversampling rate,
**in that** the register positions in the shift register are connected in parallel to the input of a FIFO memory for the parallel storage of a plurality of shift register contents read out in succession,
**in that** the output of the FIFO memory is connected in parallel with the shift register positions for the parallel transfer of data to the shift register,
**in that** a further memory is provided for holding reference signal sequences, and
**in that** a comparator is provided for comparing the FIFO memory content with the content of the other memory at the oversampling rate.

5. Apparatus according to Claim 4,
**characterized in that**
an adder is provided at the output of the comparator in order to add up the logic values produced during the bit-by-bit comparison for matching bit positions,
**in that** the adder comprises a cascaded interconnection of two-bit adders, the outputs of two respective adders being connected to the inputs of a succeeding adder.

## Revendications

1. Procédé d'acquisition pour lequel une séquence d'extension codée de façon binaire entrant avec une fréquence f est corrélée à une séquence d'extension produite localement avec m bits, un grand nombre de séquences d'extension produites localement étant déphasées par rapport à la séquence d'extension reçue,
et une corrélation de la séquence d'extension reçue avec une séquence d'extension produite localement étant exécutée avec la fréquence f,
**caractérisé en ce que**
• la séquence d'extension reçue est mémorisée et cette séquence d'extension reçue mémorisée est traitée avec un taux de suréchantillonnage i*f et
• la séquence d'extension reçue mémorisée est répartie en i segments et la corrélation est exécutée en i étapes.

2. Procédé selon la revendication 1 **caractérisé en ce que** la séquence d'extension reçue est décalée bit par bit au cours de k cycles en k variantes de segments ayant respectivement m bits avec un taux de suréchantillonnage de k*f, pour lequel le bit ayant la valeur la plus grande d'une variante de segment est décalé à la place du bit ayant la valeur la plus petite de la variante de segment suivante, pour lequel après k cycles le bit ayant la valeur la plus petite est remplacé par le bit suivant de la séquence d'extension reçue et l'opération est répétée (m-1) fois,
• pour lequel la séquence d'extension produite localement est répartie en k segments ayant chacun n bits et chacun de ces segments à l'intérieur d'un cycle est comparé à une variante de segment de la séquence d'extension entrée,
• pour lequel toutes les correspondances sont comptées et les résultats du compteur sont mémorisés et
• pour lequel finalement une recherche du maximum est exécutée sur tous les résultats de recherche.

3. Procédé selon la revendication 1 ou 2 **caractérisé en ce que** le nombre des segments d'une longueur prédéfinie est k = 32 et la longueur de puce des segments est n = 32.

4. Dispositif avec des moyens pour réaliser les étapes du procédé selon la revendication 1, **caractérisé en ce qu'**il y a un registre à décalage réinjecté qui est destiné à recueillir en série la séquence de signaux reçue et qui est synchronisé par un taux de suréchantillonnage,
que les places de registre du registre à décalage sont reliées en parallèle à l'entrée d'une mémoire premier entré premier sorti destinée à mémoriser en parallèle plusieurs contenus de registre à décalage successivement extraits,
que la mémoire premier entré premier sorti est reliée en parallèle du côté de la sortie aux places de registre à décalage destinées à transmettre en parallèle les données dans le registre à décalage,
qu'il y a une autre mémoire destinée à recueillir des séquences de signaux de référence et
qu'il y a un comparateur destiné à comparer le contenu de la mémoire premier entré premier sorti au contenu de l'autre mémoire selon le taux de suréchantillonnage.

5. Dispositif selon la revendication 4, **caractérisé en ce qu'**il y a sur la sortie du comparateur un additionneur pour additionner les valeurs logiques produites lors de la comparaison bit par bit lorsque des places de bits correspondent,
que l'additionneur est composé d'une interconnexion en cascade d'additionneurs de 2 bits, les sorties de respectivement deux additionneurs étant connectées aux entrées d'un additionneur suivant.
